# EUROPEAN PATENT SPECIFICATION

(11) **EP 2 278 901 B1**
(45) Date of publication and mention of the grant of the patent: **18.01.2012**
(21) Application number: 09749854.7
(22) Date of filing: 19.05.2009
(51) Int. Cl.: A47J 31/44

(54) **AUTOMATIC MACHINE FOR PRODUCING BEVERAGES**
MASCHINE ZUR AUTOMATISCHEN GETRÄNKEHERSTELLUNG
MACHINE AUTOMATIQUE DE PRODUCTION DE BOISSONS

(30) Priority: 20.05.2008 IT TO20080375
(43) Date of publication of application: 02.02.2011
(73) Proprietor: SGL Italia S.r.l. con unico socio, 10156 Torino (TO) (IT)
(72) Inventor: BERTOLINA, Andrea, I-14048 Montegrosso d'Asti (IT)
(74) Representative: Jorio, Paolo
(86) International application number: PCT/EP2009/056102
(87) International publication number: WO 2009/141364

(56) References cited:
- EP-A- 1 767 129
- WO-A-03/086157
- WO-A-2007/082888
- DE-A1-102006 025 419

## Description

### TECHNICAL FIELD

The present invention relates to an automatic machine for producing beverages by percolating powdered material.

### BACKGROUND ART

More specifically, the present invention relates to an automatic machine for producing beverages by percolating powdered material, and of the type disclosed, for example, in DE 10 2006 025419 and comprising a front wall; a window formed through the front wall to allow the user to load a measure of material; and a door closing the window.

### DISCLOSURE OF INVENTION

It is an object of the present invention to provide a machine of the above type, which is highly compact, cheap and easy to manufacture, and provides for troublefree loading of the material.

According to the present invention, there is provided an automatic machine for producing beverages by percolating powdered material, as claimed in Claim 1 and preferably in any one of the following Claims depending directly or indirectly on Claim 1.

### BRIEF DESCRIPTION OF THE DRAWING

A non-limiting embodiment of the invention will be described by way of example with reference to the accompanying drawings, in which:
Figures 1 and 2 show front views of a preferred embodiment of the machine according to the present invention in respective different operating configurations;
Figure 3 shows a larger-scale view in perspective of a detail in Figures 1 and 2;
Figure 4 shows a larger-scale inside view of a detail in Figure 1;
Figure 5 shows a larger-scale inside view in perspective of a detail in Figure 2.

### BEST MODE FOR CARRYING OUT THE INVENTION

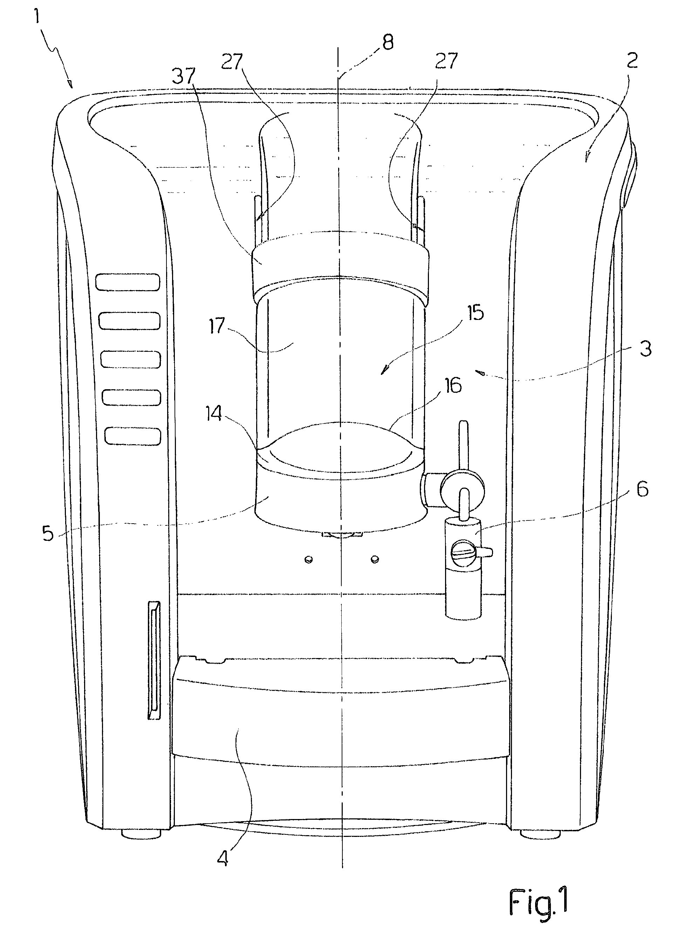

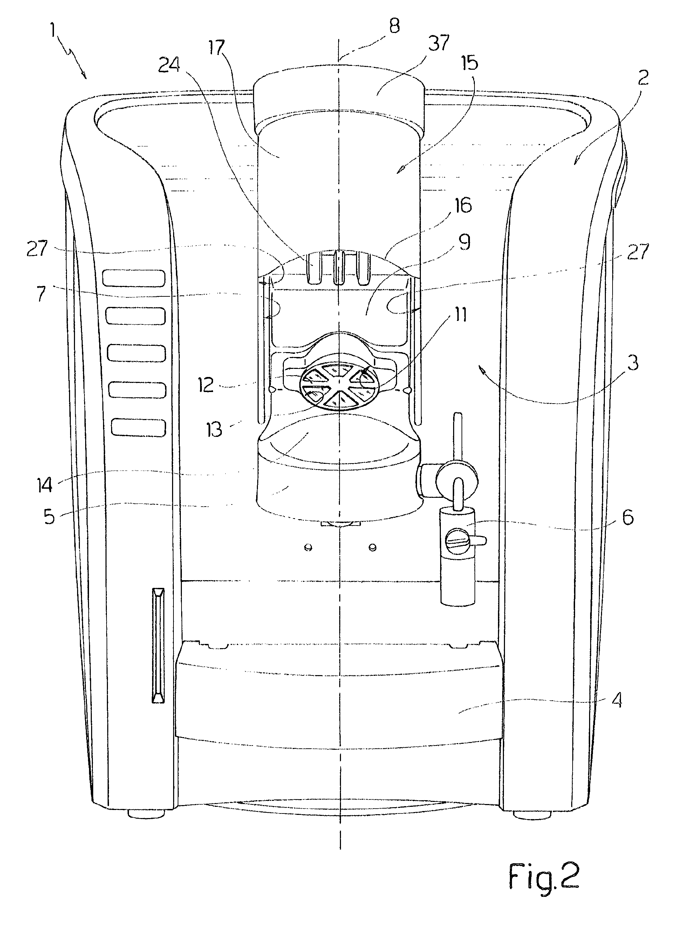

Number 1 in Figures 1 and 2 indicates as a whole an automatic machine for producing beverages - in this case, espresso coffee - by percolating powdered material.

Machine 1 comprises an outer casing 2 having a front wall 3, from which project outwards a support 4 for supporting a cup (not shown) for the beverage; and a dispenser assembly 5 having a steam dispensing device 6 and located over and a given distance from support 4.

Above dispenser assembly 5, front wall 3 has a substantially rectangular window 7 centred with respect to a vertical axis 8 of symmetry of front wall 3 and closed by a plate 9, which is fitted to an inner surface 10 of front wall 3 and has an opening 11 by which a measure of powdered material, contained in a capsule 12, is inserted from the outside into a percolating seat 13 (Figure 2). Plate 9 comprises a lower body 14 projecting outwards through a bottom portion of window 7 and resting on dispenser assembly 5.

Window 7 and opening 11 are protected by a door 15 which slides, in a direction parallel to axis 8, between a lowered closed position (Figure 1), in which an edge 16 of door 15 rests on a top edge of lower body 14 to prevent access to window 7 and, hence, opening 11, and a raised open position (Figure 2) allowing access to opening 11 from the outside to load capsule 12 into seat 13.

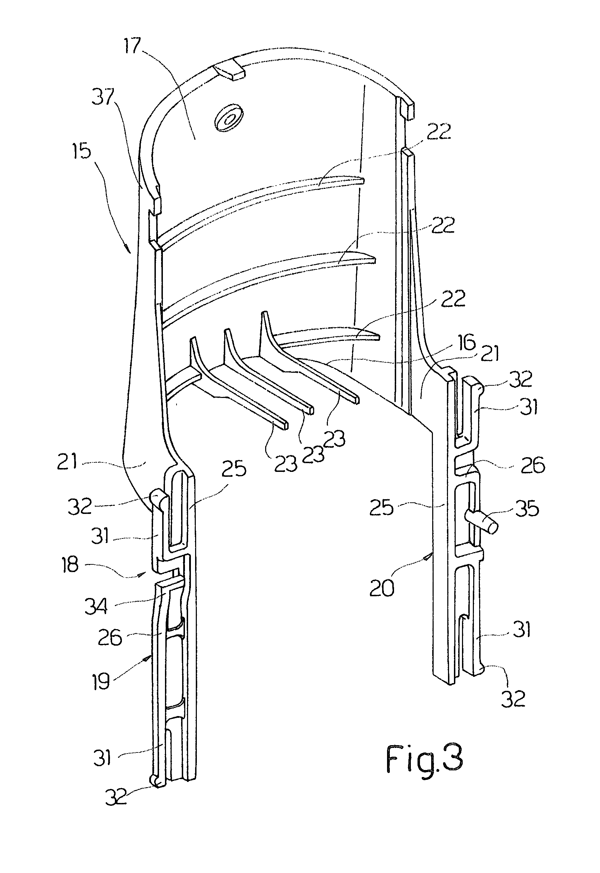

As shown more clearly in Figure 3, door 15 has a substantially inverted-U-shaped structure, and comprises a central top cover portion 17, which constitutes the actual door 15 and is convex in shape with its concavity facing front wall 3; and a bottom guide portion 18. Bottom portion 18 comprises two skids 19 and 20, each of which extends downwards, in a direction parallel to axis 8, from the free end of a respective appendix 21 projecting, in a direction substantially perpendicular to front wall 3, from the bottom end of a respective lateral edge of top portion 17.

Top portion 17 is reinforced internally by a number of transverse ribs 22, and has, at edge 16, which is a bottom edge of top portion 17, a number of feeler fingers 23, which are perpendicular to front wall 3, extend through window 7, and engage in transversely sliding manner respective grooves 24 formed in a top portion of plate 9. Grooves 24 are axially open towards opening 11 to allow feeler fingers 23 to engage opening 11 when door 15 is in the lowered closed position. Fingers 23 are designed to interfere with capsule 12, in the event capsule 12 is not inserted properly inside seat 13, to prevent full closure of door 15 and, as explained below, startup of the operating cycle of machine 1.

Each skid 19, 20 in bottom portion 18 has an L-shaped cross section, and comprises a lateral shoulder 25 coplanar with respective appendix 21; and a lateral rib 26 projecting laterally outwards from respective shoulder 25 and lying in a plane perpendicular to the plane of respective shoulder 25.

Each appendix 21 engages in sliding manner a respective slot 27 parallel to axis 8 and formed through front wall 3, outwards of a respective lateral edge of window 7; and each skid 19, 20 engages a respective substantially tubular guide 28 extending along relative slot 27 and along the inner surface 10 of front wall 3.

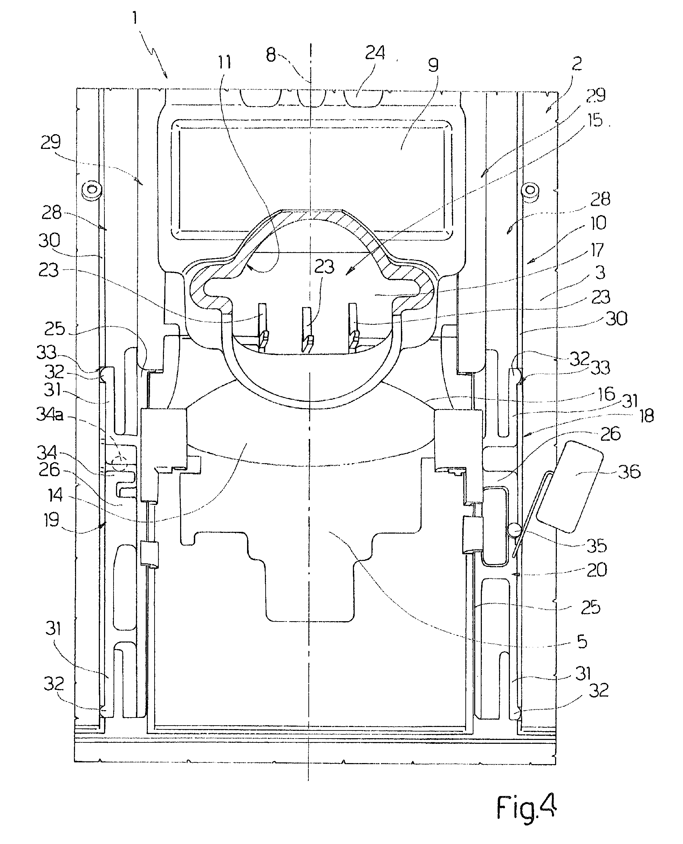

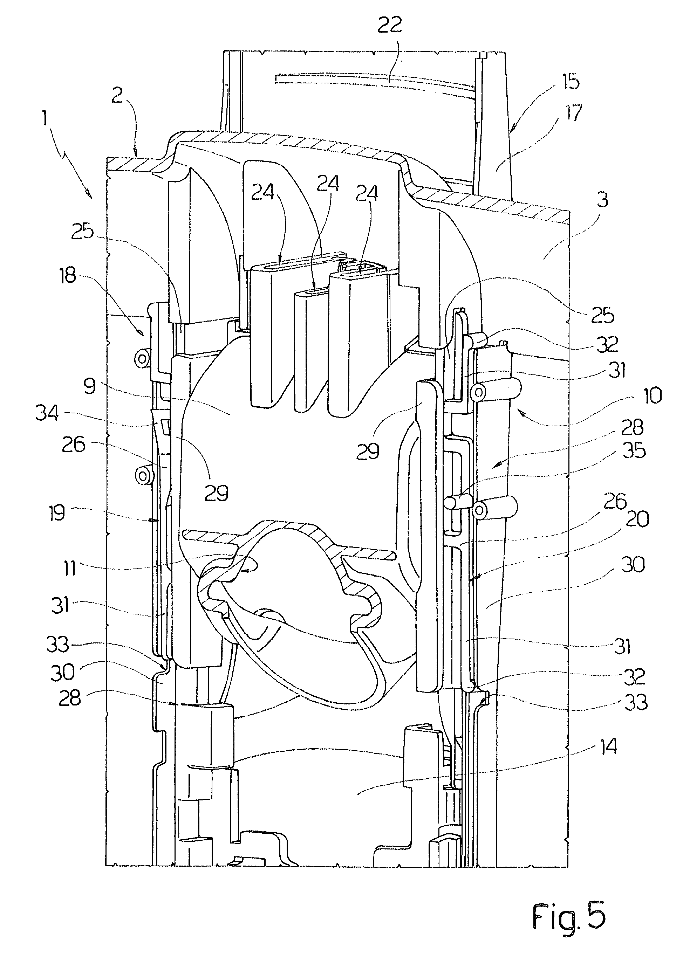

With reference to Figures 4 and 5, each guide 28 comprises a rear surface defined by inner surface 10; and an inner lateral wall and a front wall, which are defined by a respective L-section rib 29, a top portion of which is integral with plate 9, and a bottom portion of which is integral with front wall 3. Each guide 28 is also bounded laterally by a rib 30 opposite rib 29 and integral with front wall 3.

At each axial end, each rib 26 of each skid 19, 20 has an elastically deformable appendix 31, the free end of which has a laterally projecting catch 32 which, when door 15 is in the lowered closed position (Figure 4), clicks inside a respective seat 33 in relative rib 30 to click and lock door 15 releasably into the lowered closed position. When door 15 is in the raised open position (Figure 5), each top catch 32 clicks onto the top end of relative rib 30 to click and lock door releasably 15 into the raised open position.

Below its top appendix 31, rib 26 of skid 19 has a tab 34 bent towards the front wall of relative rib 29, and which, when door 15 is in the lowered closed position (Figure 4), cooperates with a pin 34a to define, with pin 34a, a mechanical safety lock of door 15.

Rib 26 of skid 20 has a central pin 35 perpendicular to front wall 3, and which activates a microswitch 36 (Figure 4) when door 15 is in the lowered closed position.

In actual use, door 15 is moved between the lowered closed position and the raised open position using an external handle 37 integral with door 15.

## Claims

1. An automatic machine for producing beverages by percolating powdered material, the machine (1) comprising a front wall (3); a window (7) formed through the front wall (3) to allow a user to load a measure (12) of material; and a door (15) closing the window (7); the door (15) being fitted to the front wall (3) to slide, in a vertical slide direction on the front wall (3), between a raised open position and a lowered closed position opening and closing the window (7) respectively; and the machine (1) being **characterized by** comprising feeler means (23) for preventing the door (15) from reaching the closed position in the event the measure (12) of material is not loaded properly; the feeler means (23) being carried by the door (15) and extending through the window (7).

2. A machine as claimed in Claim 1, wherein the door (15) comprises a first portion (17) located outside with respect to the front wall (3) and defining the actual door (15); and a second portion (18) located inside with respect to the front wall (3) and defining a guide device (28) of the door (15).

3. A machine as claimed in Claim 2, wherein the door (15) comprises a third portion (21) connecting the first and second portion (17, 18); slot means (27) being formed through the front wall (3) to allow the third portion (21) to move with the first and second portion (17, 18) in the slide direction.

4. A machine as claimed in Claim 2 or 3, wherein the first portion (17) comprises a handle (37) for operating the door (15).

5. A machine as claimed in one of Claims 2 to 4, and comprising at least one guide (28) integral with the front wall (3) and parallel to the slide direction; the second portion (18) comprising a skid (19, 20) that engages the guide (28) in sliding manner.

6. A machine as claimed in Claim 5, wherein the guide (28) extends along an inner surface (10) of the front wall (3).

7. A machine as claimed in one of the foregoing Claims, and comprising catch means (32) for clicking and locking the door (15) releasably into the open and closed positions.

8. A machine as claimed in one of the foregoing Claims, and comprising control means (35, 36) for determining the position of the door (15) and for only allowing startup of an operating cycle of the machine (1) when the door (15) is in the closed position.

9. A machine as claimed in Claim 8, wherein said control means comprise contrasting means (35) integral with the door (15); and a fixed switch (36) activated by the contrasting means when the door (15) is in the closed position.

10. A machine as claimed in one of the foregoing Claims, and comprising catch means (34a) for locking the door (15) in the closed position during an operating cycle of the machine (1).

## Patentansprüche

1. Automatische Maschine zur Herstellung von Getränken durch Perkolieren von pulverförmigem Material, wobei die Maschine (1) eine vordere Wand (3); ein durch die vordere Wand (3) gebildetes Fenster (7), das einem Benutzer das Laden einer Charge (12) des Materials gestattet; und eine Tür (15), die das Fenster (7) schließt, aufweist; und wobei die Tür (15) an der vorderen Wand (3) derart angebracht ist, dass sie in einer vertikalen Verschiebungsrichtung an der vorderen Wand (3) zwischen einer angehobenen offenen Postition und einer abgesenkten geschlossenen Position verschiebbar ist, wodurch das Fenster (7) geöffnet bzw. geschlossen wird; und wobei die Maschine (1) **dadurch gekennzeichnet ist, dass** sie ein Fühlermittel (23) aufweiset, das verhindert, dass die Tür (15) sie geschlossene Position in dem Fall erreicht, dass die Charge (12) des Materials nicht ordnungsgemäß geladen ist, und dass das Fühlermittel (23) von der Tür (15) gestützt ist und sich durch das Fenster (7) erstreckt.

2. Maschine nach Anspruch 1, wobei die Tür (15) einen ersten Abschnitt (17), der sich in Bezug auf die vordere Wand (3) außerhalb befindet und die eigentliche Tür (15) festlegt, und einen zweiten Abschnitt (18), der sich in Bezug auf die vordere Wand (3) innerhalb befinden und eine Führungsvorrichtung (28) der Tür (15) festlegt, aufweist.

3. Maschine nach Anspruch 2, wobei die Tür (15) einen dritten Abschnitt (21), der den ersten und den zweiten Abschnitt (17, 18) verbindet; ein Schlitzmittel (27), das durch die vordere Wand (3) gebildet ist und eine Bewegung des dritten Abschnittes (21) mit dem ersten und dem zweiten Anschnitt (17, 18) in der Verschiebungsrichtung gestattet, aufweist.

4. Maschine nach Anspruch 2 oder 3, wobei der erste Anschnitt (17) einen Griff (37) zum Betätigen der Tür (15) aufweist.

5. Maschine nach einem der Ansprüche 2 bis 4, und aufweisend zumindest eine Führung (28), die integral mit der vorderen Wand (3) ist und parallel zu der Verschiebungsrichtung verläuft, wobei der zweite Abschnitt (18) eine Kufe (19, 20) aufweiset, die mit der Führung (28) verschiebbar in Eingriff tritt.

6. Maschine nach Anspruch 5, wobei die Führung (28) sich entlang einer inneren Oberfläche (10) der vorderen Wand (3) erstreckt.

7. Maschine nach einem der vorhergehenden Ansprüche, und aufweisend ein Arretiermittel (32) zum lösbaren Klicken und Sperren der Tür (15) in der geöffneten und geschlossenen Position.

8. Maschine nach einem der vorhergehenden Ansprüche, und aufweisend ein Steuermittel (35, 36) zum Bestimmen der Position der Tür (15) und zum Ermöglichten des Beginns eines Betriebszyklus der Maschine (1) lediglich dann, wenn die Tür (15) sich in der geschlossenen Postition befindet.

9. Maschine nach Anspruch 8, wobei das Steuermittel ein entgegenwirkendes Mittel (35), das integral mit der Tür (15) ist, und einen stationären Schalter (36), der durch das entgegenwirkende Mittel antiviert wird, wenn die Tür (15) sich in der geschlossenen Postition befindet, aufweist.

10. Maschine nach einem der vorhergehenden Ansprüche, und aufweisend ein Arretiermittel (34a) zum Sperren der Tür (15) in der geschlossenen Postition während eines Betriebszyklus der Maschine (1).

## Revendications

1. Machine automatique de production de boissons par percolation de matériaux en poudre, la machine (1) comprenant une paroi frontale (3) ; une fenêtre (7) formée à travers la paroi frontale (3) pour permettre à un utilisateur de charger une mesure (12) de matériau ; et une grille (15) fermant la fenêtre (7) ; la grille (15) étant ajustée à la paroi frontale (3) pour coulisser, dans une direction verticale de coulissement sur la paroi frontale (3), entre une position ouverte relevée et une position fermée abaissée ouvrant et fermant la fenêtre (7) respectivement ; et la machine (1) étant **caractérisée par** le fait de comprendre un moyen palpeur (23) permettant d'empêcher la grille (15) d'atteindre la position fermée dans le cas où la mesure (12) de matériau n'est pas chargée correctement ; le moyen palpeur (23) étant soutenu par la grille (15) et s'étendant à travers la fenêtre (7).

2. Machine telle que revendiquée dans la revendication 1, dans laquelle la grille (15) comprend une première partie (17) située à l'extérieur de la paroi frontale (3) et définissant la grille effective (15) ; et une deuxième partie (18) située à l'intérieur de la paroi frontale (3) et définissant un dispositif de guidage (28) de la grille (15).

3. Machine telle que revendiquée dans la revendication 2, dans laquelle la grille (15) comprend une troisième partie (21) reliant les première et deuxième parties (17, 18) ; un moyen formant fente (27) étant formé à travers la paroi frontale (3) pour laisser la troisième partie (21) se déplacer avec les première et deuxième parties (17, 18) dans la direction de coulissement.

4. Machine telle que revendiquée dans la revendication 2 ou 3, dans laquelle la première partie (17) comprend une poignée (37) permettant de manoeuvrer la grille (15).

5. Machine telle que revendiquée dans l'une des revendications 2 à 4, et comprenant au moins un guide (28) solidaire de la paroi frontale (3) et parallèle à la direction de coulissement ; la deuxième partie (18) comprenant un patin (19, 20) qui engage le guide (28) de manière coulissante.

6. Machine telle que revendiquée dans la revendication 5, dans laquelle le guide (28) s'étend le long d'une surface intérieure (10) de la paroi frontale (3).

7. Machine telle que revendiquée dans l'une des revendications précédentes, et comprenant un moyen d'encliquetage (32) permettant l'encliquetage et le verrouillage amovibles de la grille (15) dans les positions ouverte et fermée.

8. Machine telle que revendiquée dans l'une des revendications précédentes, et comprenant un moyen de commande (35, 36) destiné à déterminer la position de la grille (15) et à permettre le démarrage d'un cycle de fonctionnement de la machine (1) uniquement lorsque la grille (15) est en position fermée.

9. Machine telle que revendiquée dans la revendication 8, dans laquelle ledit moyen de commande comprend un moyen d'opposition (35) solidaire de la grille (15), et un interrupteur fixe (36) activé par le moyen d'opposition lorsque la grille (15) est en position fermée.

10. Machine telle que revendiquée dans l'une des revendications précédentes, et comprenant un moyen d'encliquetage (34a) permettant le verrouillage de la grille (15) en position fermée pendant un cycle de fonctionnement de la machine (1).
